# EUROPEAN PATENT APPLICATION

(11) **EP 2 899 505 A1**
(43) Date of publication of application: **29.07.2015**
(21) Application number: 13838712.1
(22) Date of filing: 22.03.2013
(51) Int. Cl.: G01C 21/34, G09B 29/00

(54) **ROUTE GUIDANCE DEVICE, ROUTE GUIDANCE METHOD, AND ROUTE GUIDANCE PROGRAM**

(30) Priority: 21.09.2012 JP 2012208942
(71) Applicant: Aisin Aw Co., Ltd., Aichi 444-1192 (JP)
(72) Inventor: MASUDA, Hiroyoshi, Anjo-shi Aichi 444-1192 (JP); USHIDA, Koichi, Anjo-shi Aichi 444-1192 (JP); YANAGISAWA, Shin, Sapporo-shi Hokkaido 004-0015 (JP); INOUE, Kazuki, Sapporo-shi Hokkaido 004-0015 (JP)
(74) Representative: Intès, Didier Gérard André
(86) International application number: PCT/JP2013/058416
(87) International publication number: WO 2014/045622

(57) **Abstract**

[Object] An object is to provide a route guidance device, a route guidance method, and a route guidance program that are capable of optimizing route guidance and improving users' convenience when attaching or detaching the route guidance device with respect to an in-vehicle device.

[Solving Means] A route guidance device 10 being configured so as to be freely attachable and detachable with respect to an in-vehicle device includes: a route acquiring part 21 that acquires a vehicle route calculated based on vehicle map data and acquires a pedestrian route calculated based on the pedestrian map data; and a display 13 that outputs the vehicle route and the pedestrian route acquired by the route acquiring part 21. The route acquiring part 21, when the route guidance device 10 has been detached from the in-vehicle device 1, acquires a pedestrian route calculated based on a destination having been set to acquire the vehicle route before detachment, or when the route guidance device 10 has been attached to the in-vehicle device 1, acquires a vehicle route calculated based on a destination having been set to acquire the pedestrian route before attachment.

## Description

### TECHNICAL FIELD

The present invention relates to a route guidance device, a route guidance method, and a route guidance program.

### BACKGROUND ART

Conventionally, route guidance devices are being proposed, which calculate a route from a departure point to a destination and provide guidance on the route, the route guidance devices being configured so as to be freely attachable and detachable with respect to an in-vehicle device provided in a vehicle. For example, Patent Document 1 discloses a navigation device provided with a GPS receiver, a display, a map memory, and the like. When being installed on a mounting in a vehicle, the navigation device provides route guidance for vehicle by displaying a current position on map information including facilities and traffic regulations for vehicle. When being detached from the mounting in the vehicle, the navigation device provides route guidance for portable device by changing a map display area and/or removing certain display information such as facilities and traffic regulations for vehicle with respect to the route guidance being displayed for vehicle.

In addition, Patent Document 2 discloses a detachable navigation device structured by: an in-vehicle unit including large volume data storage means storing map data and the like; and a portable unit including data storage means and the like. In the navigation device, when a user operates a detaching button to detach the portable unit from the in-vehicle unit, the portable unit becomes detachable from the in-vehicle unit once a prior process for detachment completes. The prior process, in which a route from a position at a present time to a destination is calculated and map data necessary for guidance on the route is read from the large volume data storage means of the in-vehicle unit and stored in the data storage means of the portable unit, enables the portable unit to perform route guidance after the portable unit has been detached from the in-vehicle unit.

### RELATED ART DOCUMENT

### PATENT DOCUMENT

Patent Document 1: Japanese Patent Application Publication No. JP-A-2007-3536
Patent Document 2: Japanese Patent Application; Publication No. JP-A-2003-42779

### SUMMARY OF THE INVENTION

### Problem to be Solved by the Invention

In a conventional navigation device as recited in Patent Document 1, when the navigation device has been detached from the mounting in the vehicle, the map display area is changed and certain display information is removed. However, a route is not calculated again and the route guidance is performed using the route acquired when the navigation device was being installed on the mounting in the vehicle. Therefore, even in a case in which a route more appropriate for each usage could be provided by setting vehicle map data and pedestrian map data which are different from each other or setting a search method for vehicle and a search method for pedestrian which are different from each other, such route guidance was not possible to be performed. Therefore, there was a room for improvement in terms of optimization of route guidance.

In addition, in a conventional navigation device as recited in Patent Document 2, when detaching the portable unit from the in-vehicle unit, it was not possible to detach the portable unit until the prior process completes. Therefore, the user was not able to detach the portable unit from the in-vehicle unit and get off the vehicle immediately after stopping the vehicle. There was a room for improvement in terms of optimization of the user's convenience.

In light of the above, it is an object of the present invention to provide a route guidance device, a route guidance method, and a route guidance program that are capable of optimizing the route guidance and improving the user's convenience when attaching or detaching the route guidance device with respect to an in-vehicle device.

### Means for Solving the Problem

To solve the aforementioned problem and achieve the object, the route guidance device described in claim 1 is a route guidance device that acquires a route from a departure point to a destination and provides guidance on the acquired route, the route guidance device being configured so as to be freely attachable and detachable with respect to a vehicle, including: route acquiring means for acquiring a vehicle route calculated based on vehicle map data and acquiring a pedestrian route calculated based on pedestrian map data; and route outputting means for outputting the vehicle route and the pedestrian route acquired by the route acquiring means, wherein the route acquiring means, when the route guidance device has been detached from the vehicle, acquires a pedestrian route calculated based on the destination having been set to acquire the vehicle route before the detachment, or when the route guidance device has been attached to the vehicle, acquires a vehicle route calculated based on the destination having been set to acquire the pedestrian route before the attachment.

In the route guidance device described in claim 2, in the route guidance device according to claim 1, the route acquiring means includes vehicle route acquiring means for acquiring a vehicle route and pedestrian route acquiring means for acquiring a pedestrian route; and the pedestrian route acquiring means, when the route guidance device has been detached from the vehicle, acquires a pedestrian route calculated based on the destination having been set by the vehicle route acquiring means before the detachment, or the vehicle route acquiring means, when the route guidance device has been attached to the vehicle, acquires a vehicle route calculated based on the destination having been set by the pedestrian route acquiring means before the attachment.

The route guidance device described in claim 3, in the route guidance device according to claim 1 or 2, includes: map data storing means for storing the vehicle map data and the pedestrian map data; and communication means for receiving at least one of the vehicle map data and the pedestrian map data from a server outside the vehicle and stores the received map data in the map data storing means.

The route guidance method described in claim 4 is a route guidance method of acquiring a route from a departure point to a destination and providing guidance on the acquired route, the route guidance method of providing guidance on the route through a route guidance device being configured so as to be freely attachable and detachable with respect to a vehicle, including: route acquiring step of acquiring a vehicle route calculated based on vehicle map data and acquiring a pedestrian route calculated based on pedestrian map data; and route outputting step of outputting the vehicle route and the pedestrian route acquired at the route acquiring step, wherein at the route acquiring step, when the route guidance device has been detached from the vehicle, a pedestrian route calculated based on the destination having been set to acquire the vehicle route before the detachment is acquired, or when the route guidance device has been attached to the vehicle, a vehicle route calculated based on the destination having been set to acquire the pedestrian route before the attachment is acquired.

The route guidance program described in claim 5 is a route guidance program causing a computer to execute the method described in claim 4.

### Effects of the Invention

According to the route guidance device described in claim 1, the route guidance method described in claim 4, and the route guidance program described in claim 5, when the attachment status of the route guidance device with respect to the vehicle has changed, it is possible to acquire a route appropriate to the changed attachment status, which is calculated based on the destination having been set to acquire the route before the attachment status has changed. Thereby, it is possible to optimize the route guidance in accordance with the changed attachment status by providing the vehicle map data and the pedestrian map data which are different from each other or providing the search method for vehicle and the search method for pedestrian which are different from each other. In addition, after the attachment status has changed, it is not necessary to set a destination again. Therefore, the user's convenience can be improved. Further, after the attachment status of the route guidance device with respect to a vehicle has changed, it is possible to acquire a route appropriate to the changed attachment status. Therefore, the user's convenience can be improved. For example, immediately after parking the vehicle, the user can detach the route guidance device from the vehicle, get out of the vehicle, and walk to the destination referring to the pedestrian route. Or, immediately after arriving at a parking lot on foot, the user can attach the route guidance device to the vehicle, and drive the vehicle to the destination referring to the vehicle route.

According to the route guidance device described in claim 2, the vehicle route acquiring means and the pedestrian route acquiring means are separately provided, and by coordinating the two route acquiring means each other in accordance with the change in the attachment status of the route guidance device with respect to the vehicle, it becomes possible to acquire a route appropriate to the changed attachment status. Consequently, the program functioning as the vehicle route acquiring means can be specialized in acquiring a vehicle route as well as the program functioning as the pedestrian route acquiring means can be specialized in acquiring a pedestrian route. For example, when the program functioning as the pedestrian route acquiring means is already installed in the route guidance device, only the program functioning as the vehicle route acquiring means should be developed and installed in the route guidance device. In such a manner, each program can be limited to a certain function, thereby being capable of reducing the manpower for the development of each program.

According to the route guidance device described in claim 3, the vehicle map data and the pedestrian map data is received from a server outside the vehicle. Therefore, it is not necessary to store in advance the vehicle map data and the pedestrian map data in the route guidance device. Thus, it is possible to simplify update by collectively controlling the vehicle map data and the pedestrian map data in the server as well as reduce the amount of data stored in the route guidance device.

### BRIEF DESCRIPTION OF THE DRAWINGS

[FIG. 1] FIG. 1 is a block diagram of an in-vehicle device and a route guidance device according to an embodiment of the present invention.
[FIG. 2] FIG. 2 is a flow chart of a route guidance process.
[FIG. 3] FIG. 3 is a flow chart of a switch process at detachment.
[FIG. 4] FIG. 4 is a flow chart of a switch process at attachment.
[FIG. 5] FIG. 5 shows an example of screen display on a display of the route guidance device. FIG. 5A shows examples of screen display when providing guidance on a vehicle route. FIG. 5B shows an example of screen display when providing guidance on a vehicle route at a time when a vehicle has arrived at a parking lot. FIG. 5C shows an example of screen display when providing an inquiry for necessity of sending a destination. FIG. 5D shows an example of screen display when providing guidance on a pedestrian route.

### MODES FOR CARRYING OUT THE INVENTION

A route guidance device, a route guidance method, and a route guidance program according to the present invention is described in further detail below with reference to an embodiment in conjunction with the accompanying drawings. However, the embodiment does not limit the present invention.

### (Configuration)

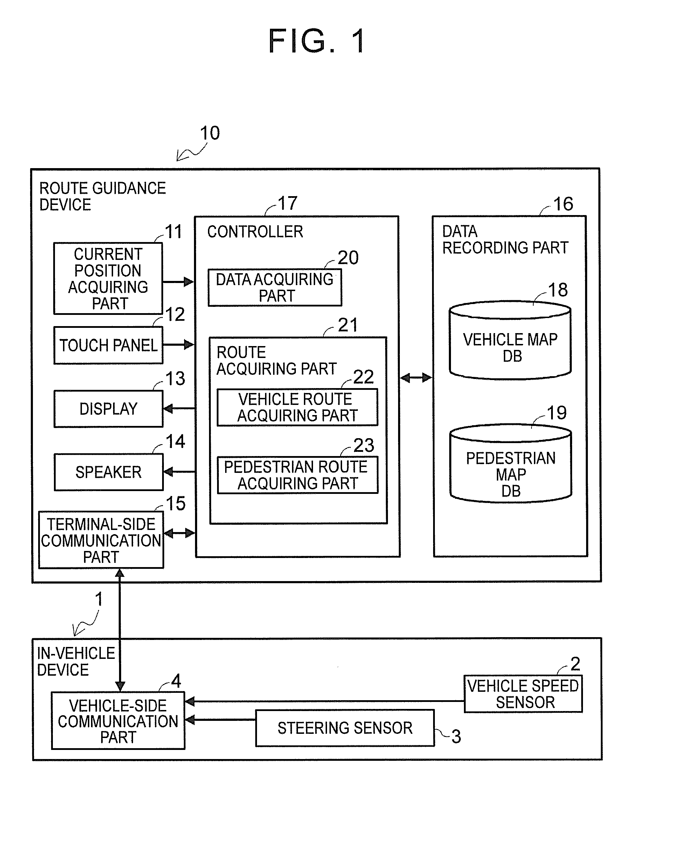

Initially, a configuration of an in-vehicle device 1 and a route guidance device 10 according to the present embodiment is explained. FIG. 1 is a block diagram of the in-vehicle device 1 and the route guidance device 10.

The route guidance device 10 is a device that acquires a route from a departure point to a destination and provides guidance on the acquired route, and is configured so as to be freely attachable and detachable with respect to a vehicle.

The "vehicle" here means any vehicle, on which the route guidance device 10 can be attached and detached, and includes automobiles (including four-wheeled automobiles and two-wheeled automobiles), motorbikes, light vehicles, and trolleybuses. In addition, the "vehicle" is not limited to the objects that realize basic functions of the vehicle, but includes the objects installed on the vehicle that realize supplemental functions of the vehicle. For example, the former objects correspond to HMI (Human Machine Interface), ECU (Electric Control Unit or Engine Control Unit), and various kinds of sensors. The latter objects correspond to base devices for navigation and vehicular audio devices. Hereinafter, the latter objects are called "in-vehicle device 1" and attaching and detaching the route guidance device 10 with respect to the in-vehicle 1 are exemplified. The "in-vehicle device 1" may be configured as a device that provides to the route guidance device 10 at least a part of information necessary for the route guidance device 10 to perform route guidance when the route guidance device 10 is being attached to the in-vehicle 1. The information to be provided as such corresponds to, for example, various kinds of map information such as vehicle map data as described later and various kinds of information (hereinafter, referred to as search accuracy improving information) that improves the accuracy of search of the route guidance device 10, such as vehicle speed information. An example of providing the search accuracy improving information from the in-vehicle device 1 to the route guidance device 10 is explained below.

In addition, the "route guidance device 10" acquires a route from a departure point to a destination and provides guidance on the acquired route, and is configured so as to be freely attachable and detachable with respect to the vehicle. The route guidance device 10 may be configured as a dedicated device for route guidance or as a general device having functions other than the route guidance. For example, the former device corresponds to portable navigation devices and the latter device corresponds to any devices including cellular phones, smart phones, or tablet terminals, in which a route guidance program (a route guidance application) is installed. The explanation below is given using an example that the route guidance device 10 is configured by installing a route guidance program in a smart phone. However, the explanation for the functions of the smart phone itself are not given because it can be configured in the same manner as known smart phones. The configuration to achieve the route guidance functions is especially explained.

The "attachment" of the route guidance device 10 with respect to the vehicle means making at least a part of information necessary for the route guidance device 10 to perform route guidance as described above communicable between the vehicle and the route guidance device 10. For example, when the information is provided by wire communication, connecting the route guidance device 10 with respect to the vehicle by wire corresponds to the "attachment." When the information is provided by wireless communication, arranging environment in which the route guidance device 10 is wirelessly communicable with the vehicle corresponds to the "attachment." The "communication" between the vehicle and the route guidance device 10 may be unidirectional communication from the vehicle to the route guidance device 10, or bidirectional communication between the vehicle and the route guidance device 10 (the same applied to the "detachment" described later). Further, the representative manner of the "attachment" is achieved with mechanical fixing of the route guidance device 10 with respect to the vehicle, for example, fixing the route guidance device 10 to a fixing apparatus provided in the vehicle or in the vicinity of the vehicle. However, mechanical fixing is not essential. For example, an action of connecting, by communication cable, the vehicle to the route guidance device 10 that is simply placed on a seat or a dashboard of the vehicle corresponds to the "attachment."

On the other hand, the "detachment" of the route guidance device 10 with respect to the vehicle means making at least a part of information necessary for the route guidance device 10 to perform route guidance as described above incommunicable between the vehicle and the route guidance device 10. For example, when the information is provided by wire communication, cutting the wire connection of the route guidance device 10 with respect to the vehicle corresponds to the "detachment." When the information is provided by wireless communication, arranging environment in which the route guidance device 10 is wirelessly incommunicable with the vehicle corresponds to the "detachment." Further, the representative manner of the "detachment" is achieved with releasing mechanical fixing of the route guidance device 10 with respect to the vehicle, for example, removing the route guidance device 10 from a fixing apparatus provided in the vehicle or in the vicinity of the vehicle. However, releasing mechanical fixing is not essential. For example, an action of releasing wire connection by communication cable of the vehicle with respect to the route guidance device 10 that is simply placed on a seat or a dashboard corresponds to the "detachment." The explanation below is given using an example that the "attachment" is performed by connecting by wire the route guidance device 10 with respect to the vehicle and the "detachment" is performed by cutting the wire connection.

### (Configuration - In-vehicle Device)

Initially, the configuration of the in-vehicle device 1 is explained. As shown in FIG. 1, the in-vehicle device 1 is provided with a vehicle speed sensor 2, a steering sensor 3, and a vehicle-side communication part 4.

### (Configuration - In-vehicle Device - Vehicle Speed Sensor)

The vehicle speed sensor 2 outputs vehicle speed pulse signals that are proportional to rotation number of a wheel axis. The vehicle speed sensor 2 may be, for example, a known vehicle sensor.

### (Configuration - In-vehicle Device - Steering Sensor)

The steering sensor 3 detects an operated angle of a steering wheel of the vehicle and outputs the detected value. The steering sensor 3 may be, for example, a known steering sensor.

### (Configuration - In-vehicle Device - Vehicle-Side Communication Part)

The vehicle-side communication part 4 is vehicle-side communication means for communicating with the route guidance device 10. The vehicle-side communication part 4 transmits, by wire communication to the route guidance device 10, the search accuracy improving information such as speed pulse signals outputted from the vehicle speed sensor 2 and the detected values outputted from the steering sensor 3. The vehicle-side communication part 4 may be, for example, a known wire communication device.

### (Configuration - Route Guidance Device)

Next, the configuration of the route guidance device 10 is explained. As shown in FIG. 1, the route guidance device 10 is provided with a current position acquiring part 11, a touch panel 12, a display 13, a speaker 14, a terminal-side communication part 15, a data recording part 16, and a controller 17.

### (Configuration - Route Guidance Device - Current Position Acquiring Part)

The current position acquiring part 11 is current position acquiring means for acquiring a current position of the route guidance device 10. Specifically, the current position acquiring part 11 includes at least one of a GPS and a geomagnetic sensor (not shown) and detects a position (a coordinate), a direction, and the like of the route guidance device 10 in a known method.

### (Configuration - Route Guidance Device - Touch Panel)

The touch panel 12 receives various kinds of manual inputs from a user when being pressed by a finger of the user or the like. The touch panel 12 is transparent or semi-transparent and installed so as to be superimposed on a display face of the display 13 that is located in front of the display 13. The touch panel 12 may be, for example, a known touch panel provided with operated position detecting means adopting, for example, a resistance film method, a capacitance method, or the like.

### (Configuration - Route Guidance Device - Display)

The display 13 is output means for outputting a vehicle route and a pedestrian route calculated by the route guidance device 10. The display 13 is not limited to a specific configuration. The display 13 may be a flat panel display such as a known liquid crystal display and organic EL display.

### (Configuration - Route Guidance Device - Speaker)

The speaker 14 is output means for outputting various kinds of audio. The audio outputted by the speaker 14 is not limited to a specific manner. The audio can be a synthetic audio generated as needed or a previously recorded audio.

### (Configuration - Route Guidance Device - Terminal-Side Communication Part)

The terminal-side communication part 15 is terminal-side communication means for communicating with the in-vehicle device 1. The terminal-side communication part 15 receives the search accuracy improving information from the in-vehicle device 1 by wire communication. The terminal-side communication part 15 may be, for example, a known wire communication device and connected with the vehicle-side communication part 4 of the in-vehicle device 1 by communication cable.

### (Configuration - Route Guidance Device - Data Recording Part)

The data recording part 16 is recording means for recording programs and various kinds of data necessary for operation of the route guidance device 10. The data recording part 16 may be, for example, a hard disk or a flash memory (not shown) serving as an external recording device. However, in place of the hard disk or in combination of the hard disk, other storage medium including a magnetic storage medium such as a magnetic disk or an optical storage medium such as a DVD and a Blu-ray disk can be utilized.

The data recording part 16 is provided with a vehicle map database (database is hereinafter referred to as "DB") 18 and a pedestrian map DB 19.

The vehicle map DB 18 is vehicle map data storing means for storing vehicle map data. The "vehicle map data" is data necessary to provide guidance on a vehicle route (a route supposed to be traveled by a vehicle) and includes, for example, vehicle road attribute data (including one-way and highway data), intersection data (intersection coordinate or the like), vehicle traffic regulation data, vehicle map display data to display a vehicle map on the display 13, and the like. In addition, the "vehicle map data" includes node data representing nodes set corresponding to terminals (intersections) of road sections, link data representing information regarding road sections between nodes, shape interpolating point data to identify shapes of road sections between nodes. In the link data, information to identify parts in shielded spaces where GPS signals are shielded among the road sections is associated with each road section. The vehicle map data configured as such is previously recorded in the vehicle map DB 18.

The pedestrian map DB 19 is pedestrian map data storing means for storing pedestrian map data. The "pedestrian map data" is data necessary to provide guidance on a pedestrian route (a route supposed to be traveled on foot) and includes pedestrian road attribute data, sidewalk data, crossing data, pedestrian bridge data, pedestrian map display data to display pedestrian map on the display 13. For example, the pedestrian map display data includes link data in the same manner as the vehicle map display data as described above. The pedestrian map data configured as such is previously recorded in the pedestrian map DB 19.

The "pedestrian" here is not limited to walk. The "pedestrian" means movement by transportation other than vehicle and includes movement by bicycle, train, or ship. In addition, the vehicle map data and the pedestrian map data may partially overlap each other.

### (Configuration - Route Guidance Device - Controller)

The controller 17 is control means for controlling the route guidance device 10, specifically, a computer provided with a CPU, various kinds of programs recognized and executed on the CPU (including a basic control program such as an OS and an application program to be activated on the OS and realize specific functions), and an internal memory such as a ROM and a RAM for storing the programs and various kinds of data. Particularly, a route guidance program according to the present embodiment is installed in the route guidance device 10 through an arbitrary recording medium or a network to substantially form respective parts of the controller 17.

The controller 17 is, in terms of function concept, provided with a data acquiring part 20 and a route acquiring part 21.

The data acquiring part 20 is acquiring means for acquiring the vehicle map data and the pedestrian map data. In the present embodiment, the data acquiring part 20 acquires the vehicle map data from the vehicle map DB 18 as well as acquires the pedestrian map data from the pedestrian map DB 19. The acquisition of such data is not limited to a specific method and the method may be changed as needed. For example, the route guidance device 10 may include communication means for communicating with network such as an internet and the data acquiring part 20 may acquire data from a server outside of the vehicle through the communication means as needed and record the data in the data recording part 16 in a volatile manner or a non-volatile manner. That is, the vehicle map data and the pedestrian map data may be acquired by either, so-called, off-line or on-line. In addition, different data may be acquired by a different route, such as either the vehicle map data or the pedestrian map data may be acquired by either off-line or on-line, and the other data may be acquired by the other route between off-line and on-line.

The route acquiring part 21 is route acquiring means for acquiring a vehicle route calculated based on the vehicle map data and a pedestrian route calculated based on the pedestrian map data. In addition, the route acquiring part 21 functions as guidance means for controlling guidance to the user through the display 13 serving as output means for outputting the acquired vehicle route and the pedestrian route.

The route acquiring part 21 is further provided with a vehicle route acquiring part 22 that acquires a vehicle route and a pedestrian route acquiring part 23 that acquires a pedestrian route. The pedestrian route acquiring part 23 is pedestrian route acquiring means for, when the route guidance device 10 has been detached from the in-vehicle device 1, acquiring a pedestrian route calculated based on the destination having been set in the vehicle route acquiring part 22 before detachment. The "acquire a pedestrian route" here includes a case where the pedestrian route acquiring part 23 calculates a route as well as a case where the pedestrian route acquiring part 23 acquires a route that was calculated by a unit (for example, an external server communicable with the route guidance device 10) other than the pedestrian route acquiring part 23 through communication or the like. The case where the pedestrian route acquiring part 23 calculates a route is exemplified later. The vehicle route acquiring part 22 is vehicle route acquiring means for, when the route guidance device 10 has been attached to the in-vehicle device 1, acquiring a vehicle route calculated based on the destination having been set in the pedestrian route acquiring part 23 before attachment. The "acquire a vehicle route" here includes a case where the vehicle route acquiring part 22 calculates a route as well as a case where the vehicle route acquiring part 22 acquires a route that was calculated by a unit (for example, an external server communicable with the route guidance device 10) other than the vehicle route acquiring part 22 through communication or the like. The case where the vehicle route acquiring part 22 calculates a route is exemplified later. The processes executed in the respective parts are specifically described later.

### (Process)

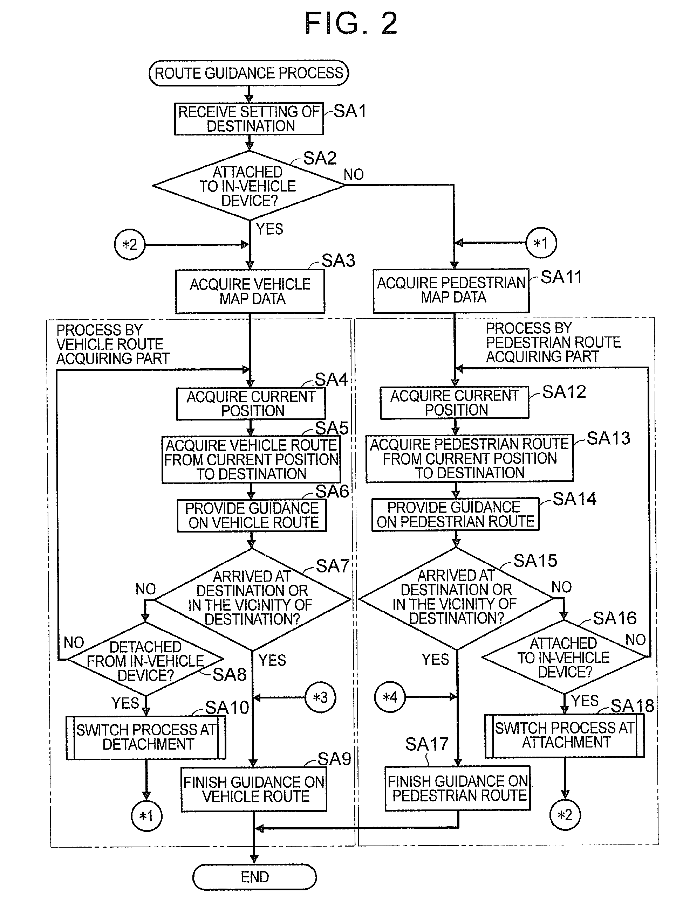

Next, a route guidance process to be executed by the route guidance device 10 configured as above is explained. FIG. 2 is a flow chart of the route guidance process. Note that, when the controlling body is not specified in the explanation of the following respective processes, the controller 17 of the route guidance device 10 executes the processes. When the source to acquire information or the route to acquire information is not specified, the information is previously stored in the data recording part 16 of the route guidance device 10 or the information is inputted by the user or the like through the touch panel 12 of the route guidance device 10 in a known timing and a known method. In addition, step is abbreviated to "S."

Initially, the controller 17 accepts a destination setting by a user through the touch panel 12 in a known method (SA1), and thereafter determines whether the route guidance device 10 is being attached to the in-vehicle device 1 (SA2). This determination may be performed in a known method, for example, by electrically detecting a connection status between the terminal-side communication part 15 and the vehicle-side communication part 4. Then, when the connection status is being maintained, it is determined that the route guidance device 10 is being attached with respect to the in-vehicle device 1 (SA2: YES), and when the connection status is being cut, it is determined that the route guidance device 10 is not being attached (detached) with respect to the in-vehicle device 1 (SA2: NO).

Initially, a case where it has been determined that the route guidance device 10 is being attached with respect to the in-vehicle device 1 is explained (SA2: YES). In such case, the data acquiring part 20 acquires the vehicle map data (SA3). Specifically, the data acquiring part 20 reads the vehicle map DB 18 to acquire the vehicle map data. Thereafter, the vehicle route acquiring part 22 acquires the current position of the route guidance device 10 through the current position acquiring part 11 (SA4), and calculates and acquires a vehicle route from the acquired current position to the destination set at SA1 (SA5). Specifically, the vehicle route acquiring part 22 calculates a vehicle route based on the vehicle map data acquired by the data acquiring part 20 in a known route calculation method.

Thereafter, the vehicle route acquiring part 22 provides guidance on the route calculated at SA5 (SA6). Specifically, the vehicle route acquiring part 22 displays on the display 13 the acquired vehicle route from the current position to the destination superimposed onto the vehicle map drawn based on the vehicle map display data. In addition, a predetermined figure indicating the current position (that is, the current position of the vehicle) of the route guidance device 10 is displayed superimposed at a position corresponding to the current position on the vehicle map.

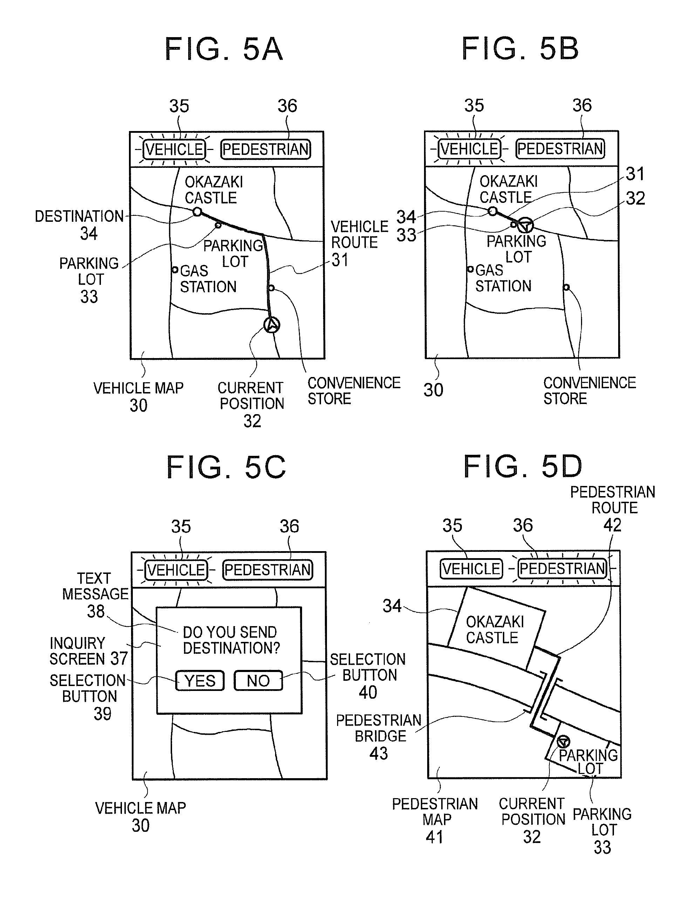

FIG. 5A shows an example of the screen display. In the screen, a vehicle route 31 is highlighted and a current position 32 of the route guidance device 10, a parking lot 33, and a destination (displayed as "Okazaki castle" in the example of FIG. 5) 34 are displayed on the vehicle map 30. In addition, in order to show that the currently displayed route is the vehicle route 31, letters 35 of "vehicle" are highlighted while letters 36 of "pedestrian" are not highlighted. Further, when the current position of the route guidance device 10 is located by a predetermined distance (for example, a distance set for vehicle such as 70m) before a guidance point of the vehicle (for example, an exit/entrance of a highway or a lane change position), the vehicle route acquiring part 22 provides predetermined audio guidance through the speaker 14.

The vehicle route acquiring part 22 repeats current position acquisition, vehicle route calculation, and vehicle route guidance by repeating SA4 to SA8 at predetermined intervals (for example, at intervals of 1 sec.) in the same manner. During repeated processes of SA4 to SA8, the vehicle route acquiring part 22 monitors whether the current position has arrived at the destination or in the vicinity of the destination (for example, a position within a predetermined radius centered at the destination) (SA7) as well as monitors whether the route guidance device 10 has been detached from the in-vehicle device 1 (SA8). When the current position has arrived at the destination or in the vicinity of the destination (SA7: YES), the vehicle route acquiring part 22 terminates guidance of the vehicle route (SA9).

When the route guidance device 10 has not arrived at the destination or in the vicinity of the destination having been set to acquire the vehicle route (SA7: NO) and the route guidance device 10 has been detached from the in-vehicle device 1 (SA8: YES), the vehicle route acquiring part 22 initiates the switch process at detachment (SA10). For example, FIG. 5B shows an example of the screen display at such moment. In the example of the screen display, a status where the user has arrived at the parking lot 33 is shown, in which the current position of the route guidance device 10 accords to the parking lot 33, but does not accord to a destination 34 and is not located in the vicinity of the destination 34 (for example, within a predetermined radius centered at the destination 34). Therefore, the user will park the vehicle at the parking lot 33, detach the route guidance device 10 from the in-vehicle device 1, and walk to the destination 34 carrying the route guidance device 10.

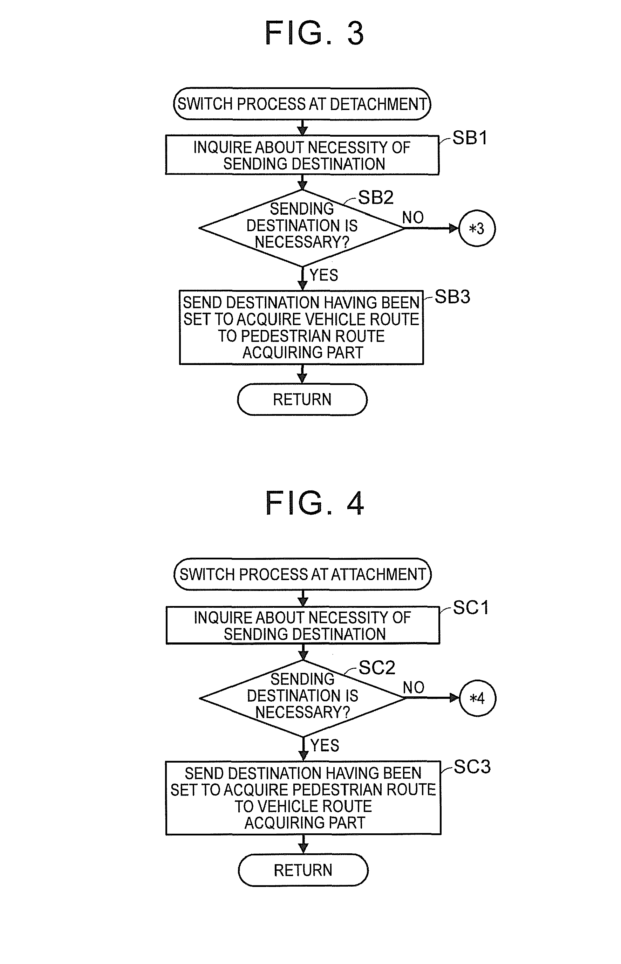

FIG. 3 is a flow chart of the switch process at detachment. In the processing, the vehicle route acquiring part 22 inquires of the user about whether it is necessary to send the destination having been set to acquire the vehicle route to the pedestrian route acquisition part 23 (SB1). The inquiry is not limited to a specific method. The inquiry may be performed with a screen display through the display 13 or by an audio output through the speaker 14. For example, as shown in FIG. 5C, an inquiry screen 37 is displayed to be superimposed on the screen where the guidance of the vehicle route was being performed. In the inquiry screen 37, a text message 38 "Send the destination?" and a selection button "YES" 39 and a selection button "NO" 40 are displayed.

When the user has selected the selection button "NO" 40 through the touch panel 12, it is determined that not sending the destination has been selected (SB2: NO). In such case, the procedure proceeds to SA9 of FIG. 2 and the vehicle route acquiring part 22 terminates the guidance of the vehicle route because there is less necessity to continue the guidance of the vehicle route in view of the fact that the route guidance device 10 has been detached from the in-vehicle device 1 and there is no necessity to calculate a pedestrian route based on the destination and provide guidance in view of the fact that not sending the destination has been selected. However, the guidance of the vehicle route may be continued in such case.

On the other hand, when the user has selected the selection button "YES" 39 through the touch panel 12, it is determined that sending the destination has been selected (SB2: YES). In such case, the vehicle route acquiring part 22 sends the destination having been set to acquire the vehicle route to the pedestrian route acquiring part 23 (SB3). Specifically, the vehicle route acquiring part 22 sends, for example, a coordinate and a name of the destination and calculation condition to instruct the pedestrian route acquiring part 23 to calculate a pedestrian route based on the destination. Then, the switch process at detachment terminates and the procedure returns to the route guidance process of FIG. 2.

When the destination has been sent in such manner, the procedure proceeds to SA11 of FIG. 2. The data acquiring part 20 acquires the pedestrian map data (SA11). Specifically, the data acquiring part 20 reads the pedestrian map DB 19 to acquire the pedestrian map data. Thereafter, the pedestrian route acquiring part 23 acquires the current position of the route guidance device 10 through the current position acquiring part 11 (SA12), and calculates and acquires a pedestrian route from the acquired current position to the destination sent from the vehicle route acquiring part 22 at the switch process at detachment (SA13). Specifically, the pedestrian route acquiring part 23 calculates a pedestrian route based on the pedestrian map data acquired by the data acquiring part 20 in a known route calculation method.

Thereafter, the pedestrian route acquiring part 23 provides guidance on the route calculated at SA13 (SA14). Specifically, FIG. 5D shows an example of the screen display. In the screen, a pedestrian route 42 is highlighted and the current position 32 of the route guidance device 10 is displayed on the pedestrian map 41. Specifically, for the pedestrian route 42, a route passing a pedestrian bridge 43 is displayed as the route from the parking lot 33 to the destination 34. In addition, in order to show that the currently displayed route is the pedestrian route, the letters 36 of "pedestrian" are highlighted while the letters 35 of "vehicle" are not highlighted. Further, when the current position of the route guidance device 10 is located by a predetermined distance (for example, a distance set for vehicle such as 1 m) before a guidance point (for example, a terminal point of a pedestrian bridge or a terminal point of a crossing), the pedestrian route acquiring part 23 provides predetermined audio guidance through the speaker 14. Consequently, the user can receive the guidance of the pedestrian route using the route guidance device 10 detached from the in-vehicle device 1.

The pedestrian route acquiring part 23 repeats current position acquisition, pedestrian route calculation, and pedestrian route guidance by repeating SA12 to SA16 at predetermined intervals (for example, at intervals of 1 sec.) in the same manner. During repeated processes of SA12 to SA16, the pedestrian route acquiring part 23 monitors whether the current position has arrived at the destination or in the vicinity of the destination (SA15) as well as monitors whether the route guidance device 10 has been attached to the in-vehicle device 1 (SA16). When the current position has arrived at the destination or in the vicinity of the destination (SA15: YES), the pedestrian route acquiring part 23 terminates the guidance of the vehicle route (SA17).

When the route guidance device 10 has not arrived at the destination or in the vicinity of the destination having been set to acquire the pedestrian route (SA15: NO) and the route guidance device 10 has been attached to the in-vehicle device 1 (SA16: YES), the pedestrian route acquiring part 23 initiates the switch process at attachment (SA18).

FIG. 4 is a flow chart of the switch process at attachment. In the process, the pedestrian route acquiring part 23 inquires of the user about whether it is necessary to send the destination having been set to acquire the pedestrian route to the vehicle route acquisition part 22 (SC1). The inquiry may be performed in the same manner as SB1 of FIG. 3.

When not sending the destination has been selected (SC2: NO), the procedure proceeds to SA17 of FIG. 2 and the pedestrian route acquiring part 23 terminates the guidance of the pedestrian route because there is less necessity to continue the guidance of the pedestrian route in view of the fact that the route guidance device 10 has been attached to the in-vehicle device 1 and there is no necessity to calculate a vehicle route based on the destination and provide guidance in view of the fact that not sending the destination has been selected. However, the guidance of the pedestrian route may be continued in such case. Then, the route guidance process terminates.

On the other hand, in FIG. 4, when sending the destination has been selected (SC2: YES), the pedestrian route acquiring part 23 sends the destination having been set to acquire the pedestrian route to the vehicle route acquiring part 22 (SC3). Specifically, the pedestrian route acquiring part 23 sends, for example, a coordinate and a name of the destination and a calculation condition to instruct the vehicle route acquiring part 22 to calculate a vehicle route based on the destination. Then, the switch process at attachment terminates and the procedure returns to the route guidance process of FIG. 2.

When the destination has been sent in such manner, the procedure proceeds to SA2 of FIG. 2 and the process is performed in the same manner as above. That is, the data acquiring part 20 acquires the vehicle map data (SA3) and the vehicle route acquiring part 22 acquires the current position of the route guidance device 10 through the current position acquiring part 11 (SA4), and calculates and acquires a vehicle route from the acquired current position to the destination set at SA1 (SA5) and provides guidance on the vehicle route (SA6). Consequently, the user can receive the guidance of the vehicle route using the route guidance device 10 attached to the in-vehicle device 1.

Next, a case where it has been determined at SA2 that the route guidance device 10 is not being attached with respect to the in-vehicle device 1 is explained (SA2: NO). In such case, the procedure proceeds to SA11 and the process is performed in the same manner as above. That is, the data acquiring part 20 acquires the pedestrian map data (SA11), and the pedestrian route acquiring part 23 acquires the current position of the route guidance device 10 through the current position acquiring part 11 (SA12), calculates and acquires a pedestrian route from the acquired current position to the destination set at SA1 (SA13), and provides guidance on the pedestrian route (SA14). Consequently, the user can receive the guidance of the pedestrian route using the route guidance device 10 not attached to the in-vehicle device 1.

When the route guidance device 10 has not arrived at the destination or in the vicinity of the destination having been set to acquire the pedestrian route (SA15: NO) and the route guidance device 10 has been attached to the in-vehicle device 1 (SA16: YES), the pedestrian route acquiring part 23 initiates the switch process at attachment (SA18). Thereafter, in the same manner as described above, in the switch process at attachment of FIG. 4, the pedestrian route acquiring part 23 inquires of the user about whether it is necessary to send the destination having been set to acquire the pedestrian route to the vehicle route acquisition part 22 (SC1). When not sending the destination has been selected (SC2: NO), the procedure proceeds to SA17 of FIG. 2 and the pedestrian route acquiring part 23 terminates the guidance of the pedestrian route. When sending the destination has been selected (SC2: YES), the pedestrian route acquiring part 23 sends the destination having been set to acquire the pedestrian route to the vehicle route acquiring part 22 (SC3). Thereafter, the procedure proceeds to SA2 of FIG. 2, and calculation and guidance of a vehicle route are performed. Therefore, after having arrived at a parking lot on foot, the user is able to immediately attach the route guidance device 10 to the in-vehicle device 1, and start to drive to the destination by referring to the vehicle route.

### (Effect)

According to the present embodiment, when the attachment status of the route guidance device 10 with respect to the in-vehicle device 1 has changed, it is possible to acquire a route appropriate to the changed attachment status, which is calculated based on the destination having been set to acquire the route before the attachment status has changed. Thereby, it is possible to optimize the route guidance according to the changed attachment status, for example, by providing the vehicle map data and the pedestrian map data which are different each other or providing the search method for vehicle and the search method for pedestrian which are different each other. In addition, after the attachment status has changed, it is not necessary to set a destination again. Therefore, the user's convenience can be improved. Further, after the attachment status of the route guidance device 10 with respect to the in-vehicle device 10 has changed, it is possible to acquire a route appropriate to the changed attachment status. Therefore, the user's convenience can be improved. For example, after parking the vehicle, the user can detach the route guidance device 10 from the in-vehicle device 10, get out of the vehicle, and walk to the destination referring to the pedestrian route. Or, immediately after arriving at a parking lot on foot, the user can attach the route guidance device 1 to the in-vehicle device 10, and drive the vehicle to the destination referring to the vehicle route.

In addition, the vehicle route acquiring part 22 and the pedestrian route acquiring part 23 are separately provided, and by coordinating the two route acquiring parts each other according to the change in the attachment status of the route guidance device 10 with respect to the in-vehicle device 1, a route appropriate to the changed attachment status can be acquired by the route acquiring part. Consequently, the program functioning as the vehicle route acquiring part 22 can be specialized in acquiring a vehicle route as well as the program functioning as the pedestrian route acquiring part 23 can be specialized in acquiring a pedestrian route. For example, when the program functioning as the pedestrian route acquiring part 23 is already installed in the route guidance device 10, only a program functioning as the vehicle route acquiring part 22 should be developed and installed in the route guidance device 10. In such manner, each program can be limited to a certain function, thereby being capable of reducing the manpower for the development of each program.

In addition, the vehicle map data and the pedestrian map data is received from a server outside the vehicle. Therefore, it is not necessary to store in advance the vehicle map data and/or the pedestrian map data in the route guidance device 10, thereby being capable of simplifying update by collectively controlling the vehicle map data and the pedestrian map data in the server as well as reducing the amount of data stored in the route guidance device 10.

### (Modification examples for the embodiment)

While various features have been described in conjunction with the embodiment according to the present invention, various modifications and/or improvements may be made without departing from the broad spirit and scope of the underlying principles described in claims. The examples of these alternatives are described below.

### (Problems to be solved by the invention and its effects)

Problems to be solved by the invention and effects of the invention are not limited to the contents described above, and may vary depending on the environment where the invention is executed and/or details of the configuration. Therefore, only a part of the problems described above may be solved, or only a part of the effects described above may be accomplished. For example, even when the route guidance cannot be optimized or the users' convenience cannot be improved by the invention compared to the conventional ones, the problem of the present invention is being solved as long as the route guidance is optimized or the users' convenience is improved at the same level as the conventional ones by a technology different from the conventional technologies.

### (Division and Integration)

The electronic constituent elements described above are merely functional concepts, and need not be physically configured as illustrated in the drawings. That is, the specific form of division/integration of each portion is not limited to that shown in the drawings. The constituent elements, as a whole or in part, can be divided and/or integrated in any manner either functionally or physically based on various types of loads or use conditions. For example, the respective constituent elements of the route guidance device 10 may be separately provided and connected each other through arbitrary network.

### (Route acquiring part)

In the aforementioned embodiment, an example of acquiring a pedestrian route calculated based on the destination having been set to acquire the vehicle route and an example of acquiring a vehicle route calculated based on the destination having been set to acquire the pedestrian route are explained. However, only one of the two cases may be performed.

In the aforementioned embodiment, an example is explained, in which, when the route guidance device 10 has been detached from the in-vehicle device 1, if the route guidance device 10 has not arrived at the destination or in the vicinity of the destination having been set to acquire the vehicle route before detachment, a pedestrian route calculated based on the destination having been set to acquire the vehicle route before detachment is acquired. However, the pedestrian route calculated based on the destination having been set to acquire the vehicle route before detachment may be acquired regardless of whether the route guidance device 10 has arrived at the set destination or in the vicinity of the set destination. In the same manner, in the aforementioned embodiment, an example is explained, in which, when the route guidance device 10 has been attached to the in-vehicle device 1, if the route guidance device 10 has not arrived at the destination or the in the vicinity of the destination having been set to acquire the pedestrian route before attachment, a vehicle route calculated based on the destination having been set to acquire the pedestrian route before detachment is acquired. However, the vehicle route calculated based on the destination having been set to acquire the pedestrian route before attachment may be acquired regardless of whether the route guidance device 10 has arrived at the set destination or in the vicinity of the set destination.

In addition, in the aforementioned embodiment, an example is explained, in which, when the route guidance device 10 has been detached from the in-vehicle device 1, a pedestrian route calculated based on the destination having been set to acquire the vehicle route before detachment is acquired. However, when the route guidance device 10 has been detached from the in-vehicle device 1, a vehicle route may be further acquired. In the same manner, in the aforementioned embodiment, an example is explained, in which, when the route guidance device 10 has been attached to the in-vehicle device 1, a vehicle route calculated based on the destination having been set to acquire the pedestrian route before attachment is acquired. However, when the route guidance device 10 has been attached to the in-vehicle device 1, a pedestrian route may be further acquired. That is, when the route guidance device 10 has been detached from the in-vehicle device 1, "at least" a pedestrian route calculated based on the destination having been set to acquire the vehicle route before detachment may be acquired. In addition, when the route guidance device 10 has been attached to the in-vehicle device 1, "at least" a vehicle route calculated based on the destination having been set to acquire the pedestrian route before attachment may be acquired.

In addition, in the aforementioned embodiment, an example is explained, in which the route acquiring part 21 is provided with the vehicle route acquiring part 22 and the pedestrian route acquiring part 23. In such case, in these respective parts, the functions may be realized by applications that are different each other. Specifically, the vehicle route acquiring part 22 may be realized by an application dedicated to acquire vehicle routes and configured to be able to perform data acquisition, vehicle route acquisition and vehicle route guidance independently without using the function of the pedestrian route acquiring part 23 and the like. In addition, the pedestrian route acquiring part 23 may be realized by an application dedicated to acquire pedestrian routes and configured to be able to perform data acquisition, vehicle route acquisition, and vehicle route guidance independently without using the function of the vehicle route acquiring part 22 and the like. Or, the vehicle route acquiring part 22 and the pedestrian route acquiring part 23 may be realized by one application.

### (Map data)

In the aforementioned embodiment, an example is explained, in which the vehicle map DB 18 storing the vehicle map data and the pedestrian map DB 19 storing the pedestrian map data are separately provided and stored in the data recording part 16. However, the vehicle map DB 18 and the pedestrian map DB 19 may be integrally provided. For example, a database of an integral map data including information of the vehicle map data and information of the pedestrian map data may be compiled and stored in the data recording part 16.

### (Relation between route acquiring part and map data)

In the aforementioned embodiment, an example is explained, in which: the vehicle route acquiring part 22 and the pedestrian route acquiring part 23 are provided in the controller 17; and the vehicle map DB 18 and the pedestrian map DB 19 are provided in the data recording part 16. However, the route acquiring part and the map data may be integrally provided. For example, the vehicle map data may be given in the program functioning as the vehicle route acquiring part 22, and the pedestrian map data may be given in the program functioning as the pedestrian map DB 19.

### (Necessity of sending a destination)

In the aforementioned embodiment, an inquiry for the necessity of sending a destination is given to the user. However, the inquiry may be omitted, and the destination may be automatically sent when the route guidance device 10 has been detached from the in-vehicle device 1 or when the route guidance device 10 has been attached to the in-vehicle device 1.

### [Reference Numerals]

1: IN-VEHICLE DEVICE
2: VEHICLE SPEED SENSOR
3: STEERING SENSOR
4: VEHICLE-SIDE COMMUNICATION PART
10: ROUTE GUIDANCE DEVICE
11: CURRENT POSITION ACQUIRING PART
12: TOUCH PANEL
13: DISPLAY
14: SPEAKER
15: TERMINAL-SIDE COMMUNICATION PART
16: DATA RECORDING PART
17: CONTROLLER
18: VEHICLE MAP DB
19: PEDESTRIAN MAP DB
20: DATAACQUIRING PART
21: ROUTE ACQUIRING PART
22: VEHICLE ROUTE ACQUIRING PART
23: PEDESTRIAN ROUTE ACQUIRING PART
30: VEHICLE MAP
31: VEHICLE ROUTE
32: CURRENT POSITION
33: PARKING LOT
34: DESTINATION
35, 36: LETTERS
37: INQUIRY SCREEN
38: TEXT MESSAGE
39, 40: SELECTION BUTTON
41: PEDESTRIAN MAP
42: PEDESTRIAN ROUTE
43: PEDESTRIAN BRIDGE

## Claims

1. A route guidance device that acquires a route from a departure point to a destination and provides guidance on the acquired route, the route guidance device being configured so as to be freely attachable and detachable with respect to a vehicle, comprising:
route acquiring means for acquiring a vehicle route calculated based on vehicle map data and acquiring a pedestrian route calculated based on pedestrian map data; and
route outputting means for outputting the vehicle route and the pedestrian route acquired by the route acquiring means, wherein
the route acquiring means,
when the route guidance device has been detached from the vehicle, acquires a pedestrian route calculated based on the destination having been set to acquire the vehicle route before the detachment, or
when the route guidance device has been attached to the vehicle, acquires a vehicle route calculated based on the destination having been set to acquire the pedestrian route before the attachment.

2. The route guidance device according to claim 1, wherein:
the route acquiring means includes vehicle route acquiring means for acquiring a vehicle route and pedestrian route acquiring means for acquiring a pedestrian route; and
the pedestrian route acquiring means, when the route guidance device has been detached from the vehicle, acquires a pedestrian route calculated based on the destination having been set by the vehicle route acquiring means before the detachment, or
the vehicle route acquiring means, when the route guidance device has been attached to the vehicle, acquires a vehicle route calculated based on the destination having been set by the pedestrian route acquiring means before the attachment.

3. The route guidance device according to claim 1 or 2, comprising:
map data storing means for storing the vehicle map data and the pedestrian map data; and
communication means for receiving at least one of the vehicle map data and the pedestrian map data from a server outside the vehicle and stores the received map data in the map data storing means.

4. A route guidance method of acquiring a route from a departure point to a destination and providing guidance on the acquired route, the route guidance method of providing guidance on the acquired route through a route guidance device being configured so as to be freely attachable and detachable with respect to a vehicle, comprising:
route acquiring step of acquiring a vehicle route calculated based on vehicle map data and acquiring a pedestrian route calculated based on pedestrian map data; and
route outputting step of outputting the vehicle route and the pedestrian route acquired at the route acquiring step, wherein
at the route acquiring step,
when the route guidance device has been detached from the vehicle, a pedestrian route calculated based on the destination having been set to acquire the vehicle route before the detachment is acquired, or
when the route guidance device has been attached to the vehicle, a vehicle route calculated based on the destination having been set to acquire the pedestrian route before the attachment is acquired.

5. A route guidance program causing a computer to execute the method described in claim 4.
